# EUROPEAN PATENT APPLICATION

(11) **EP 2 950 215 A1**
(43) Date of publication of application: **02.12.2015**
(21) Application number: 14170522.8
(22) Date of filing: 30.05.2014
(51) Int. Cl.: G06F 9/54, G05B 19/418

(54) **Exchanging messages in a MES system**

(71) Applicant: Siemens Aktiengesellschaft, 80333 München (DE)
(72) Inventor: Basile, Roberto, 16132 Genova (IT)
(74) Representative: Maier, Daniel Oliver

(57) **Abstract**

A method and a system for exchanging messages between a server (S) and a set of clients applications (CA₁, ..,CAₘ) in a MES system,comprising: a) creating a set of logical units (LU₁, ..., LUₙ) within the server (S) for enabling the processing of concurrent access requests to the repository (REP); b) providing, within the server (S), a module called smart pool manager (SPM); c) providing a smart communication communicator (SMC) for exchanging messages; the invention further comprising at run time: d) by one client application (CA₁), sending to the smart message communicator (SMC) a given input smart message; e) executing the given data access request by performing the following sub-items: e1) by the smart message communicator, asking the smart pool manager (SPM) to select the available logical unit; e2) by the smart pool manager (SPM), selecting the logical unit according to the specific selection criteria applied to the updated status table and informing the smart message communicator (SMC); e3) by the smart message communicator (SMC), requesting the selected logical unit to execute the given data access request; e4) by the selected logical unit (LUⱼ), executing the given data access request to the repository; e5) by the selected logical unit, returning (5) to the smart message communicator the outcome of the given data access request execution; e6) notifying the smart pool manager about the execution termination of the selected logical unit (LUⱼ); e7) by the smart pool manager, updating the status table; g) by the smart message communicator (SMC), returning (8) to the at least one client application (CA₁) an output smart message with output parameters specifying information on the outcome of the given data access request execution.

## Description

The present invention relates to a method and to a system for exchanging messages in a MES system according to the preamble of the independent claims.

In the world of industrial automation of today, in order to increase competitiveness, manufacturing companies need to simultaneously reduce time-to-market, increase process visibility and production flexibility, optimize forecasting and scheduling, and reduce scrap, stock levels and downtimes; all while ensuring optimal quality and production efficiency across all global facilities.

In order to meet these demanding goals, manufacturing companies require an integrated IT infrastructure that helps them in coordinating production on a global scale and, if necessary, in real time. The Manufacturing Execution System (MES) is generally known as the IT layer that integrates the business systems (e.g. ERP) and production control systems.

The Siemens Corp. offers a broad range of MES products, under its SIMATIC® product family.

As defined by the Manufacturing Enterprise Solutions Association (MESA International), the MES system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication." The international standard for developing MES systems is commonly referred as ISA-95 or S95.

In the MES environment, it is often the case that a number of client applications need to access data stored in a repository located at the server side. Examples of clients might be computers, websites or PLCs or any other module or entity which needs to access a repository located at the server side, e.g. to request or modify a list of orders.

With the term repository, it is herein intended a set of databases, a set of file systems or any combination thereof. Examples of client access requests to the repository may comprise the following: reading data from the repository, writing data to the repository, modifying that in the repository, deleting data from the repository, moving or copying data from a first database to a second database, moving or copying data from a database to a file-system or vice-versa, moving or copying data to a first file-system to a second file-system and so on.

When several client applications sends to the server requests to access repository data at the same time, the server, confronted with several concurrent client access requests, is required to manage them in a manner to prevent the building of long queues.

Unfortunately, when the rate of the client requests for accessing database is too high, there is the risk of bottlenecks caused by the weakest point of the logical flow. In fact, in prior art techniques, queues of client access requests are often filled with the FIFO (First In First Out) approach. For example, when ten clients with concurrent calls request the server to access the database, according to the FIFO queue, the last of the ten requesting clients needs to wait for the finishing of the other nine client calls. It is noted that, typically, the server finishes dealing with a client access request call, when the repository access and the requested processing is completed. Until then, the server is typically unable to deal with other client requests waiting in the queue.

In state of the art MES systems, the problem of dealing with such growing queues and bottlenecks is dealt with techniques that specifically take into account what are the processing steps involved to deal with each specific client request. Unfortunately, such approaches require programming skills and an in depth knowledge of the processes.

It is therefore the aim of the present invention to overcome the above mentioned drawbacks, in particular by providing a method and a system for system for exchanging messages in a MES system, wherein queues and bottlenecks are minimized.

The aforementioned aim is achieved by a method and a system for exchanging messages between a server and a set of clients applications in a MES system, wherein the messages comprise input messages from the set of clients applications to the server and output messages from the server to the set of client applications; the input messages denoting client access requests of data of a repository located within the server and said output messages denoting the server responses to the corresponding client access requests; the invention comprising the following:
a) creating a set of logical units within the server for enabling the processing of concurrent access requests to the repository;
b) providing, within the server, a module for managing the repository access requests by selecting a logical unit available for access processing, according to a specific selection criteria applied to a status table comprising updated information about the execution status of each logical unit; the module being hereinafter called smart pool manager;
c) providing a service for exchanging, between the server and the set of client applications, input and output messages comprising, respectively, input and output parameters specifying, respectively, information on data access requests and information on data access responses; said messages being hereinafter called smart messages; said service being enabled to request data accesses to the repository by communicating with the smart pool manager and with the set of logical units; said service being hereinafter called smart message communicator;
   the invention further comprising, at run-time, the following:
d) by at least one client application, sending to the smart message communicator (SMC) a given input smart message with given input parameters specifying information on a given data access request to be executed;
e) executing the given data access request by performing the following:
   e1) by the smart message communicator, asking the smart pool manager to select the logical unit available for processing the given data access request;
   e2) by the SPM, selecting the logical unit according to the specific selection criteria applied to the updated status table and returning to the smart message communicator the identifier of the selected logical unit;
   e3) by the smart message communicator, requesting the selected logical unit to execute the given data access request;
   e4) by the selected logical unit, executing the given data access request to the repository;
   e5) by the selected logical unit, returning to the smart message communicator the outcome of the given data access request execution;
   e6) notifying the smart pool manager about the execution termination of the selected logical unit;
   e7) by the smart pool manager, updating the status table with the information received in the previous step;
   f) by the smart message communicator, returning to the at least one client application an output smart message with output parameters specifying information on the outcome of the given data access request execution.

In invention embodiments, the smart message communicator may preferably be located within the server.

In invention embodiments, the smart message communicator may conveniently be located within the client.

In invention embodiments, the notification of smart pool manager of item e6) may be performed by the smart message communicator or by the selected logical unit directly.

In invention embodiments, the logical units may preferably be threads.

In invention embodiments, the status table may preferably comprise information about the queue length of each logical unit; and, the given selection criteria may conveniently consist in selecting the logical unit having the shortest queue length at the time at which the smart pool manager is asked.

In invention embodiments, the input parameters of an input smart message may advantageously comprise an action descriptor and a data descriptor.

In invention embodiments, the output parameters of an output smart message may conveniently comprise an outcome descriptor and, optionally, a result data descriptor.

In invention embodiments, at run-time, one or more logical units may conveniently be created and added to the set of logical units and the status table may be updated accordingly.

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

With embodiments of the invention, more than one logical units are available for dealing with client access requests so that bottlenecks are minimized.

Embodiments of the invention allow a smart load balancing and smart queue management, thus speeding up the entire system.

With embodiments of the invention, it is possible to dynamically discover new available logical units, so that the system can be scaled upon necessity at run-time.

Embodiments of the invention a standard approach in that the client requests are managed independently from what each logical enable unity is actually doing.

The invention will now be described in preferred but not exclusive embodiments with reference to the accompanying drawings, wherein:
- Figure 1: is a block diagram schematically representing a first example embodiment with the smart message communicator located at the server side;
- Figure 2: is a block diagram schematically representing a second example embodiment with the smart message communicator located at the client side.

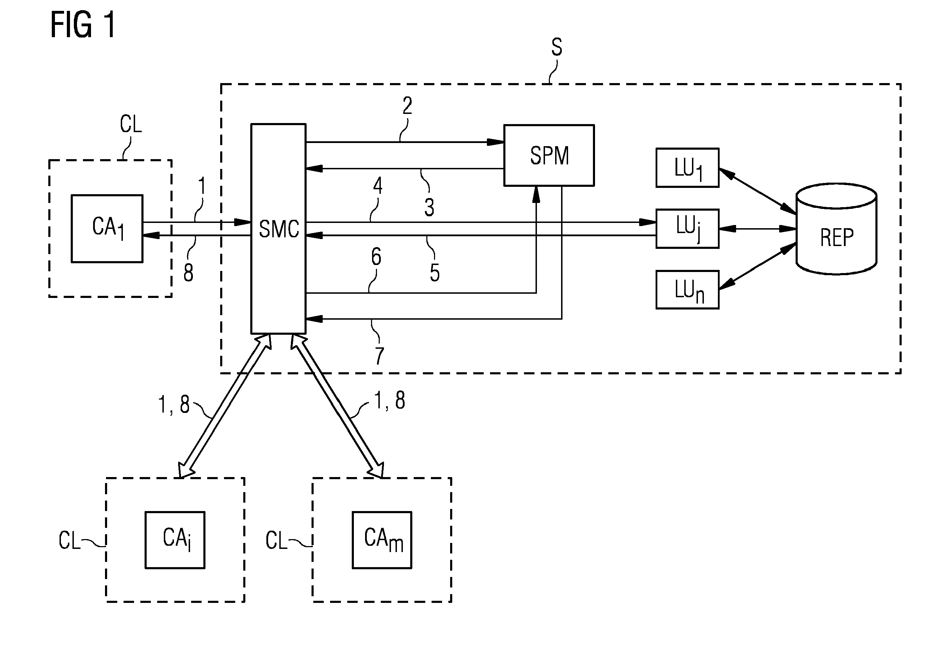

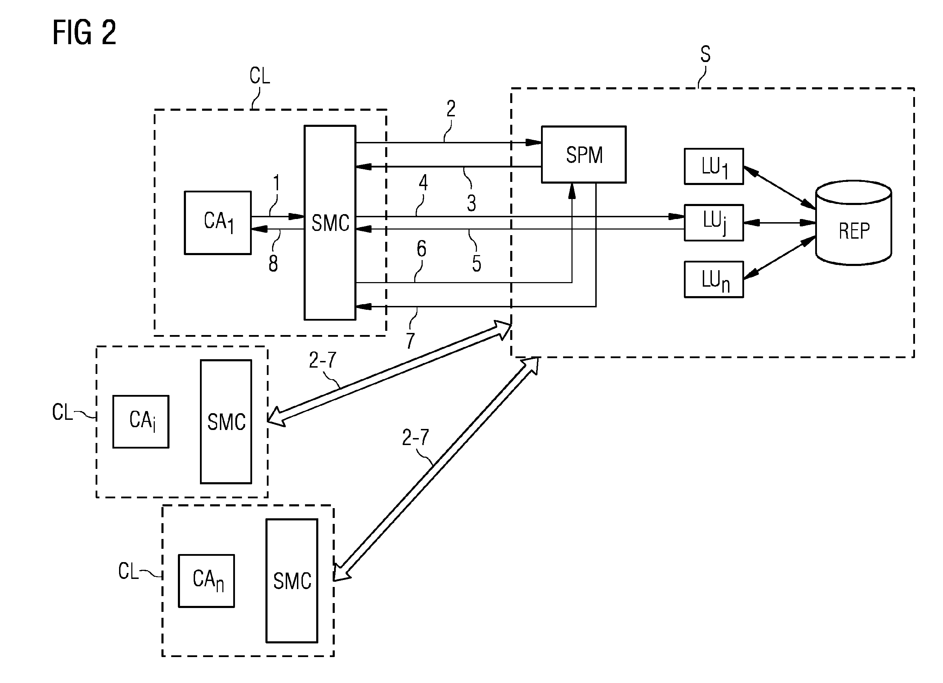

At least some embodiments of the present invention address the above described issue in which a process or system is exchanging messages between a server S and a set of clients applications CA₁,..,CAₘ in a MES system, as schematically shown in the example embodiments of Figure 1 and of Figure 2.

The messages can be input or output messages as follows:
- input messages - sent by the set of clients applications CA₁,..,CAₘ to the server S - are denoting the client access requests of data of a repository REP located within the server S;
- output messages - sent by the server S to the set of client applications CA₁,..,CAₘ - are denoting the server responses to the corresponding client access requests defined in the input messages.

A set of logical units LU₁, ..., LUₙ is created within the server S for enabling the processing of concurrent access requests to the repository REP. For example, in an embodiment, the set of logical units LU₁, ..., LUₙ may be obtained through cloning starting from a boilerplate. In invention embodiments, the logical units (LU1, ..., LUn) may be any logic computer element, such as, for example, threads, processes, executables and so on.

Within the server S, it is provided a module called smart pool manager SPM for enabling the managing of the client access requests to the repository REP in a smart manner. The provided smart pool manager SPM is able of selecting a logical unit LUⱼ which is available for executing a given client access request by interrogating a status table comprising updated information about the execution status of each logical unit LU₁, LUⱼ, LUₙ. The available logical unit LUⱼ is selected by the smart pool manager SPM according to a specific selection of criteria set applied to the status table. Thus, the smart pool manager SPM acts as a router or dispatcher for conveying a given client input message to the optimal available logical unit LUⱼ selected in accordance to a set of defined optimization criteria, based for example on the status of the queues. In invention embodiments, the status table comprises information about the queue length of each logical unit LU₁, ..., LUₙ; and the given selection criteria consists in selecting the logical unit LUⱼ having the shortest queue length at the time at which the smart pool manager SPM is asked.

It is provided a service called service smart message communicator SMC for exchanging input messages and output messages between the server S and the set of client applications CA₁,..,CAₙ. The provided smart message communicator SMC is capable of request data accesses to the repository REP by communicating with the smart pool manager SPM and with the set of logical units LU₁, ..., LUₙ.

According to a first example embodiment of the present invention, the smart message communicator SMC may be preferably located at the server side S as shown in Figure 1. The smart message communicator SMC located within the server might be implemented as a web-service.
According to a second example embodiment of the present invention, the smart message communicator SMC may be conveniently located at the client side CL as shown in Figure 2. The smart message communicator SMC located within the client CL might be implemented as a method of a DLL (Dynamic Link Library).

The input messages comprise input parameters specifying information on data access requests. In invention embodiments, the input parameters may comprise an action descriptor specifying information on the action to be requested (e.g. read, write, delete and so on) and a data descriptor (e.g. specifying information on the data). In invention embodiments, the output parameters may comprise an outcome descriptor, and, optionally, a result data descriptor. Alternatively, in invention embodiments, the input or output descriptor may be one descriptor including all the relevant information. Descriptor may conveniently be in a WSDL (Web Services Description Language) format. The input and output messages are herein called, for sake of conciseness, smart messages.

At run-time the following is performed:
- at least one client application CA₁ sends 1 to the smart message communicator SMC a given input smart message with given input parameters specifying information on a given data access request to be executed;
- the given data access request is executed as follows:
   o the smart message communicator SMC asks 2 the smart pool manager SPM to select the logical unit LUⱼ available for processing the given data access request;
   o the smart pool manager SPM selects the logical unit LUⱼ according to the specific selection criteria applied to the updated status table and returns 3 to the smart message communicator SMC the identifier of the selected logical unit LUⱼ;
   o the smart message communicator SMC requests 4 the selected logical unit LUⱼ to execute the given data access request;
   o the selected logical unit LUⱼ executes the given data access request to the repository REP;
   o the selected logical unit LUⱼ, returns 5 to the smart message communicator SMC the outcome of the given data access request execution;
   o the smart message communicator SMC, or alternatively the selected logical unit LUⱼ itself (not shown), notifies 6 the smart pool manager SPM about the execution termination of the selected logical unit LUⱼ;
   o the smart pool manager SPM updates the status table with the information received in the previous step; optionally, the smart pool manager SPM might notify 7 the smart message communicator SMC that the update was successfully performed;
- the smart message communicator SMC returns 8 to the at least one client application CA₁ an output smart message with output parameters specifying information on the outcome of the given data access request execution.

In invention embodiments, at run-time, one or more logical units may conveniently be created and added to the set of logical units LU₁, LUⱼ, LUₙ. In other embodiments, logical units might be deleted at run-time. In both cases, the status table needs to be updated accordingly.

### Simplified example embodiment

Let us describe a simple example embodiment of the present invention, where three logical units have been cloned, called U₁, U₂, U₃. Table shows the information about the queue length of each logical unit contained in the status table at time T₁.

**Table 1**

| Logical Unit Name | Queue Length |
|---|---|
| U1 | 0 |
| U2 | 1 |
| U3 | 2 |

The smart message communicator SMC asks 2 the smart pool manager SPM which is the logical unity more free at time T1 as best candidate to manage the processing of a given input message coming from a given client application. It is noted that the client application CA₁ itself is unaware of the total number of logical units which are present, such information is managed by the smart message communicator SMC.

The smart pool manager SPM responds 3 to the smart message communicator SMC that, at time T₁, the logical unit U₂ is the best unit to address the input message to, due to the fact that the queue length is the shortest. Therefore, the smart message communicator SMC addresses 4 the input message to the unit U₂ for processing. The smart pool manager SPM is notified 5 about the processing completion of logical unit U₂ and it updates the status table accordingly so that it is aligned with the real time situation.

## Claims

1. A method for exchanging messages between a server (S) and a set of clients applications (CA₁,..,CAₘ) in a MES system, wherein the messages comprise input messages from the set of clients applications (CA₁,..,CAₘ) to the server (S) and output messages from the server (S) to the set of client applications (CA₁,..,CAₘ); said input messages denoting client access requests of data of a repository (REP) located within the server (S) and said output messages denoting the server responses to the corresponding client access requests;
the method comprising the following steps:
a) creating a set of logical units (LU₁, ..., LUₙ) within the server (S) for enabling the processing of concurrent access requests to the repository (REP);
b) providing, within the server (S), a module for managing the repository access requests by selecting a logical unit (Uⱼ) available for access processing, according to a specific selection criteria applied to a status table comprising updated information about the execution status of each logical unit (LU₁, LUⱼ, LUₙ); said module being hereinafter called smart pool manager (SPM);
c) providing a service for exchanging, between the server and the set of client applications, input and output messages comprising, respectively, input and output parameters specifying, respectively, information on data access requests and information on data access responses; said messages being hereinafter called smart messages; said service being enabled to request data accesses to the repository by communicating with the smart pool manager (SPM) and with the set of logical units; said service being hereinafter called smart message communicator (SMC);
the method further comprising the following steps to be performed at run time:
d) by at least one client application (CA₁), sending to the smart message communicator (SMC) a given input smart message with given input parameters specifying information on a given data access request to be executed;
e) executing the given data access request by performing the following sub-steps:
e1) by the smart message communicator (SMC), asking the smart pool manager (SPM) to select the logical unit available for processing the given data access request;
e2) by the smart pool manager (SPM), selecting the logical unit according to the specific selection criteria applied to the updated status table and
returning to the smart message communicator (SMC) the identifier of the selected logical unit (LUⱼ);
e3) by the smart message communicator (SMC), requesting the selected logical unit (LUⱼ) to execute the given data access request;
e4) by the selected logical unit (LUⱼ), executing the given data access request to the repository;
e5) by the selected logical unit (LUⱼ), returning (5) to the smart message communicator (SMC) the outcome of the given data access request execution;
e6) notifying the smart pool manager (SPM) about the execution termination of the selected logical unit (LUⱼ);
e7) by the smart pool manager (SPM), updating the status table with the information received in the previous step.
f) by the smart message communicator (SMC), returning (8) to the at least one client application (CA₁) an output smart message with output parameters specifying information on the outcome of the given data access request execution.

2. The method according to claim 1, wherein the smart message communicator (SMC) is located within the server (S).

3. The method according to claim 1, wherein the smart message communicator (SMC) is located within the client (CL).

4. The method according to any of the previous claims, where in sub-step e6) the notification of smart pool manager (SPM) is performed by the smart message communicator (SMC) or by the selected logical unit (LUⱼ) directly.

5. The method according to any of the previous claims,
wherein the logical units (LU₁, ..., LUₙ) are threads.

6. The method according to any of the previous claims, wherein:
- the status table comprises information about the queue length of each logical unit (LU₁, ..., LUₙ);
- the given selection criteria consists in selecting the logical unit (LUⱼ) having the shortest queue length at the time at which the smart pool manager (SPM) is asked.

7. The method according to any of the previous claims,
wherein the input parameters of an input smart message comprises an action descriptor and a data descriptor.

8. The method according to any of the previous claims,
wherein the output parameters of an output smart message comprise an outcome descriptor and, optionally, a result data descriptor.

9. The method according to any of the previous claims,
wherein, at run-time, one or more logical units are created and added to the set of logical units (LU₁, LUⱼ, LUₙ) and wherein the status table is updated accordingly.

10. The process according to any of the previous claims **characterized in that** it is implemented in software.

11. A system for exchanging messages between a server (S) and a set of clients applications (CA₁,..,CAₘ) in a MES system, wherein the messages comprise input messages from the set of clients applications (CA₁,..,CAₘ) to the server (S) and output messages from the server (S) to the set of client applications (CA₁,..,CAₘ); said input messages denoting client access requests of data of a repository (REP) located within the server (S) and said output messages denoting the server responses to the corresponding client access requests;
the system comprising the following means to be used at run-time:
a) means for creating a set of logical units (LU₁, ..., LUₙ) within the server (S) for enabling the processing of concurrent access requests to the repository (REP);
b) means for providing, within the server (S), a module for managing the repository access requests by selecting a logical unit (Uⱼ) available for access processing, according to a specific selection criteria applied to a status table comprising updated information about the execution status of each logical unit (LU₁, LUⱼ, LUₙ); said module being hereinafter called smart pool manager (SPM);
c) means for providing a service for exchanging, between the server (S) and the set of client applications (CA₁,..,CAₙ), input and output messages comprising, respectively, input and output parameters specifying, respectively, information on data access requests and information on data access responses; said messages being hereinafter called smart messages; said service being enabled to request data accesses to the repository (REP) by communicating with the smart pool manager (SPM) and with the set of logical units (LU₁, ..., LUₙ); said service being hereinafter called smart message communicator (SMC);
the system further comprising the following:
d) means for sending (1), by at least one client application (CAᵢ), to the smart message communicator (SMC) a given input smart message with given input parameters specifying information on a given data access request to be executed;
e) means for executing the given data access request including the following sub-means:
e1) means for asking (2), by the smart message communicator (SMC), the smart pool manager (SPM) to select the logical unit (LUⱼ) available for processing the given data access request;
e2) means for selecting, by the smart pool manager (SPM), the logical unit (LUⱼ) according to the specific selection criteria applied to the updated status table and returning (3) to the smart message communicator (SMC) the identifier of the selected logical unit (LUⱼ);
e3) means for requesting (4), by the smart message communicator (SMC), the selected logical unit (LUⱼ) to execute the given data access request;
e4) means for executing, by the selected logical unit (LUⱼ), the given data access request to the repository (REP) ;
e5) means for returning (5), by the selected logical unit (LUⱼ), to the smart message communicator (SMC) the outcome of the given data access request execution;
e6) means for notifying (6) the smart pool manager (SPM) about the execution termination of the selected logical unit (LUⱼ);
e7) means for updating, by the smart pool manager (SPM),
the status table with the information received in the previous step;
f) means for returning, by the smart message communicator (SMC) (8), to the at least one client application (CAᵢ) an output smart message with output parameters specifying information on the outcome of the given data access request execution.
